# NEUE EUROPÄISCHE PATENTSCHRIFT

(11) **EP 0 418 507 B2**
(45) Veröffentlichungstag und Bekanntmachung des Hinweises auf die Entscheidung über den Einspruch: **08.01.1997**
(45) Hinweis auf die Patenterteilung: 28.04.1993
(21) Anmeldenummer: 90114246.3
(22) Anmeldetag: 25.07.1990
(51) Int. Cl.: F16D 63/00, F16D 1/08

(54) **Brems- oder/und Klemmeinrichtung**
Device for braking and/or jamming
Dispositif de freinage et/ou de serrage

(30) Priorität: 16.09.1989 DE 3931014
(43) Veröffentlichungstag der Anmeldung: 27.03.1991
(73) Patentinhaber: MANNESMANN REXROTH PNEUMATIK GMBH, 30453 Hannover (DE)
(72) Erfinder: Fortmann, Norbert, D-3000 Hannover 1 (DE); Kook, Ralf, D-3000 Hannover 61 (DE); Göttling, Helmut, D-3004 Isernhagen 4 (DE); Kruppa, Hans, D-3013 Barsinghausen (DE); Janetzko, Horst, D-3100 Celle (DE); Scharnowski, Gerhard, D-3007 Gehrden 1 (DE)
(74) Vertreter: Flaig, Siegfried

(56) Entgegenhaltungen:
- DE-A- 3 319 042
- DE-A- 3 615 985
- DE-C- 660 546
- DE-C- 2 823 257
- US-A- 4 093 042
- US-A- 4 957 313
- INA Masskatalog D 303, 1974, S.46-51, 116, 117, 133
- FAG Standardprogramm, September 1978, S. 608-613
- SKF Hauptkatalog, Dezember 1975, S. 114-125

## Beschreibung

Die Erfindung betrifft eine Brems- oder/und Klemmeinrichtung für einen axial bewegbaren oder/und drehbaren zylindrischen Körper gemäß dem Oberbegriff des Patentanspruchs 1.

Eine derartige Brems- oder/und Klemmeinrichtung ist z.B. aus der DE-OS 33 19 042 bekannt.

Eine solche Einrichtung kann beispielsweise in einem druckmittelbetätigten Arbeitszylinder zum Arretieren der mit einem Arbeitskolben verbundenen Kolbenstange verwendet werden. Ein mit einer solchen Einrichtung versehener Arbeitszylinder ist u.a. einsetzbar als Fenster- und Lüftungsklappenbetätigung.

Bei einer derartigen Einrichtung treten hohe Kräfte an den Laufflächen für die Wälzkörper auf. Eine genaue Bearbeitung und gegebenenfalls erforderliche Reparatur ist relativ aufwendig.

Der Erfindung liegt deshalb die Aufgabe zugrunde, eine Brems- oder/und Klemmeinrichtung der eingangs genannten Art zu schaffen, welche so aufgebaut ist, daß sich die Laufflächen für die Wälzkörper einfach bearbeiten lassen und eine Reparatur mit einfachen Mitteln ermöglicht wird.

Diese Aufgabe wird mit der im Patentanspruch angegebenen Erfindung gelöst. Weiterbildungen und vorteilhafte Ausgestaltungen der Erfindung werden in den Unteransprüchen aufgezeigt.

Die Erfindung bietet insbesondere den Vorteil, durch die lösbare Befestigung der die Laufflächen aufweisenden Laufflächen-Teile an den Klemmelementen oder/und an dem Betätigungsglied eine Bearbeitung der Laufflächen erheblich zu erleichtern.
Gemäß des Erfindungsgegenstandes sind die die Laufflächen aufweisenden Laufflächen-Teile wahlweise so angeordnet, daß mit ihnen wahlweise entweder in der einen Bewegungsrichtung oder in der anderen Bewegungsrichtung des Betätigungsgliedes Brems- oder Klemmwirkung an dem zylindrischen Körper erzielt wird, wobei sowohl die an den Klemmelementen als auch die am Betätigungsglied angeordneten Laufflächen-Teile mit schrägen Laufflächen versehen, und so zueinander angeordnet, sind daß die einander zugewandten schrägen Laufflächen parallel zueinander verlaufen. Werden zwischen den einander zugewandten Laufflächen mehrere Wälzkörper in Richtung der Längsachse der Klemmelemente und des Betätigungsgliedes angeordnet, so wird eine hohe Klemmkraftbeiniedriger Betätigungskraft des Betätigungsgliedes erzielt.
Desweiteren wird durch diese Maßnahme der Verschleiß an den Klemmelementen und dem Betätigungsglied. insbesondere an deren Laufflächen erheblich reduziert.

Eine weitere Reduzierung des Verschleißes an den Laufflächen wird durch Härten der Laufflächen-Teile erreicht.

Anhand der Zeichnung werden zwei Ausführungsbeispiele der Erfindung nachstehend näher erläutert.

Es zeigen:
- **Fig.1**: eine Klemmeinrichtung im Schnitt und
- **Fig.2**: einen Schnitt durch die Klemmeinrichtung gemäß Fig.1 nach der Linie A-B.

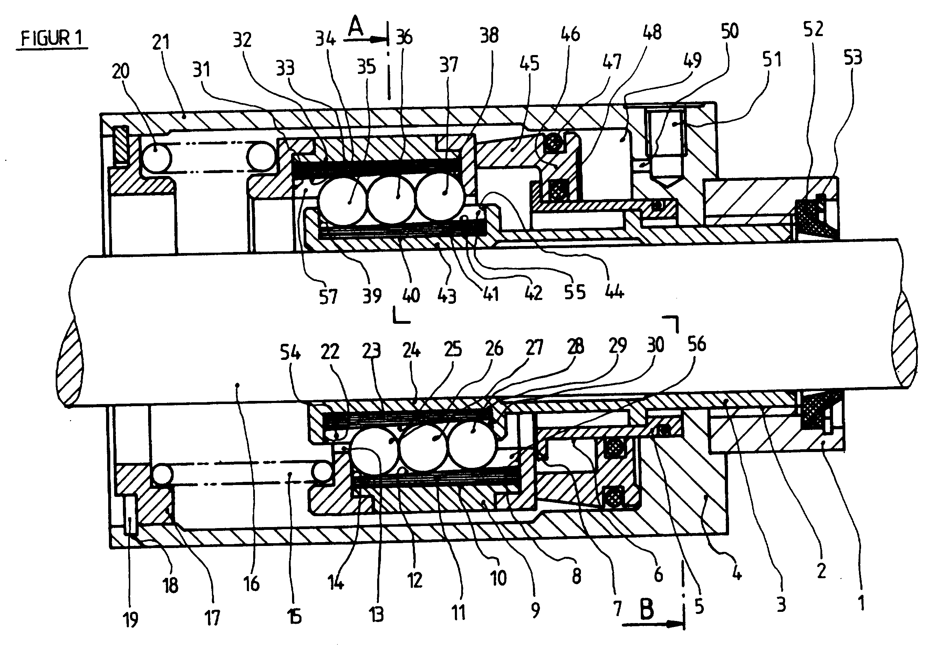

Fig.1 zeigt eine Brems- oder/und Klemmeinrichtung für die Kolbenstange eines Arbeitszylinders, wobei die Klemmeinrichtung im wesentlichen aus zwei koaxial zueinander und koaxial zu dem als Kolbenstange dienenden zylindrischen Körper angeordneten Hülsen besteht. Die innenliegende Hülse ist in ihrem freien Endbereich geschlitzt und besitzt auf ihrer der außenliegenden Hülse zugewandten Seite schräg zur Längsachse des zylindrischen Körpers verlaufende Laufflächen aufweisende Laufflächen-Teile für Wälzkörper. Desgleichen besitzt die äußere Hülse auf ihrer der inneren Hülse zugewandten Seite schräg zur Längsachse des zylindrischen Körpers verlaufende Laufflächen aufweisende Laufflächen-Teile. Die Laufflächen der Laufflächen-Teile der inneren Hülse und die Laufflächen der Laufflächen-Teile der äußeren Hülse verlaufen parallel zueinander.

Ein zylindrischer Ring (1) ist über ein Gewinde (2) mit einem als erste Hülse (3) ausgebildeten zylindrischen Element zur Aufnahme und Führung eines als Kolbenstange (16) dienenden zylindrischen Körpers verbunden. Die erste Hülse (3) und der zylindrische Körper sind koaxial zueinander angeordnet. Die erste Hülse (3) weist in ihrem freien Endbereich in Richtung ihrer Längsachse verlaufende Schlitze auf. Die durch die Schlitze gebildeten, als Klemmelemente (24 bzw. 43) dienenden Abschnitte der ersten Hülse (3) sind im wesentlichen radial zum zylindrischen Körper (16) bewegbar und weisen in ihrer äußeren Manteilfläche parallel zur Längsachse der ersten Hülse (3) verlaufende nutartige Ausnehmungen (54 bzw. 55) für je ein eine schräg zur Längsachse des zylindrischen Körpers (16) verlaufende Lauffläche (25 bzw. 42) aufweisendes Laufflächen-Teil (23 bzw. 41) auf.
Die Tiefe der nutartigen Ausnehmungen (54 und 55) ist so bemessen, daß die einander zugewandten Stirnseiten (22 und 30) bzw. (39 und 44) dieser nutartigen Ausnehmungen (54 und 55) ein Stick über die Laufflächen-Teile (23 bzw. 41) hinausragen, wenn die Laufflächen-Teile (23 bzw. 41) mit ihrer der Lauffläche angewandten Seite auf dem Nutgrund (29 bzw. 40) des zugehörigen Klemmelementes (24 bzw. 43) aufliegen.

Koaxial zur ersten Hülse (3) ist eine als Betätigungsglied dienende zweite Hülse (9) (zylindrisches Element) vorgesehen, welche die erste Hülse (3) auf einem Teil ihrer axialen Erstreckung umgibt, und zwar auf dem Laufflächen-Teil der ersten Hülse (3) welcher die Klemmelemente (24 bzw. 43) aufweist. Das Betätigungsglied (zweite Hülse 9) ist relativ zum zylindrischen Körper (Kolbenstange 16) in Richtung dessen Längsachse verschiebbar.

Die zweite Hülse (9) weist in ihrer der äußeren Mantelfläche der ersten Hülse (3) zugewandten Innenwand mehrere in Richtung der Längsachse der zweiten Hülse (9) verlaufende nutartige Ausnehmungen (56 und 57) auf, die den nutartigen Ausnehmungen (54 und 55) der ersten Hülse (3) gegenüber liegen. Jede der nutartigen Ausnehmungen (56 und 57) der zweiten Hülse (9) dient zur Aufnahme von jeweils einem eine schräg zur Längsachse des zylindrischen Körpers (16) verlaufende Lauffläche (12 bzw. 33) aufweisenden Laufflächen-Teiles (11 bzw. 34).

Die Steigung der Schrägen der Laufflächen-Teile (23 bzw. 41) der ersten Hülse (3) und die Steigung der Schrägen der Laufflächen-Teile (11 bzw. 34) der zweiten Hülse (9) verlaufen unterschiedlich, so daß die Laufflächen (25 bzw. 42) der Laufflächen-Teile (23 bzw. 41) der ersten Hülse (3) parallel zu den Laufflächen (12 bzw. 33) der Laufflächen-Teile (11 bzw. 34) der zweiten Hülse (9) verlaufen.

Die Tiefe der nutartigen Ausnehmungen (56 bzw. 57) ist so bemessen, daß die einander zugewandten Stirnseiten (14 und 8) bzw. (31 und 38) dieser nutartigen Ausnehmungen (56 bzw. 57) ein Stück über die Laufflächen-Teile (11 bzw. 34) hinausragen, wenn die Laufflächen-Teile (11 bzw. 34) mit ihrer der Lauffläche abgewandten Seite auf dem Nutgrund (10 bzw. 32) der nutartigen Ausnehmungen (56 bzw. 57) der zweiten Hülse (9) aufliegen.

Die von den Laufflächen-Teilen der Klemmelemente und des Betätigungsgliedes begrenzten nutartigen Ausnehmungen (54 und 55) zwischen der ersten Hülse (3) und den nutartigen Ausnehmungen (56 und 57) der zweiten Hülse (9) dienen zur Aufnahme von in Richtung der Längsachse der beiden Hülsen (3 bzw. 9) verlaufend hintereinander angeordneten, jeweils drei als Rollen ausgebildeten Wälzkörpern (26, 27, 28 bzw. 35, 36, 37), welche an den Laufflächen (25, 42) der Laufflächen-Teile 23, 41) der Klemmelemente (24 bzw. 43) und an den Laufflächen (12, 33) der Laufflächen-Teile (11 bzw. 34) der zweiten Hülse (9) anliegen.

Die Wälzkörper (26, 27, 28 bzw. 35, 36, 37) sind derart angeordnet, daß deren Drehachsen quer zur Längsachse der Hülsen (3 bzw. 9) verlaufen. Anstelle von Rollen können selbstverständlich auch Kugeln vorgesehen werden.

Die beiden Hülsen (3 und 9) sind in einem z.B. einteilig ausgebildeten rohrförmigen Gehäuse (21, 4) angeordnet, welches aus einem Kopfteil (4) und einem rohrförmigen Körper (21) besteht Das Gehäuse (21, 4) ist mit dem zylindrischen Ring (1) verbunden. Im Kopfteil (4) Ist ein Druckmittelanschluß (51) vorgesehen, der über einen Kanal (50) mit einer im Gehäuse (21, 4) angeordneten Druckmittelkammer (49) verbunden ist.

Die Druckmittelkammer (49) wird einerseits vom Kopfteil (4) und andererseits von einem im rohrförmigen Gehäuse (21) verschiebbar angeordneten als Betätigungseinrichtung für das Betätigungsglied (9) dienenden Ringkolben (46) begrenzt der mit seinem Außenumfang an einer Stufe der Innenwand des rohrförmigen Gehäuses (21) und mit seiner Innenseite auf der äußeren Mantelfläche eines rohrförmigen Körpers (6), der mittels eines Vorsprungs (5) am Kopfteil (4) des Gehäuses (21, 4) befestigt ist und sich auf die eine Stirnseite der beiden Hülsen (3 und 9) zu erstreckt, geführt wird. Der Ringkolben (46) weist zwei Dichtringe (48 und 47) auf, wobei ein Dichtring (47) an der Wand des rohrförmigen Gehäuses (21) und ein Dichtring (48) an der äußeren Mantelfläche des rohrförmigen Körpers (6) dichtend anliegt.
Der in Richtung der Längsachse des zylindrischen Körpers (Kolbenstange 16) verschiebbar angeordnete Ringkolben (46) weist einen umlaufenden Vorsprung (45)auf, der sich in Richtung auf die eine Stirnseite der zweiten Hülse (9) zu erstreckt und an dieser anliegt.

Der Hub des Ringkolbens (46) wird einerseits durch einen am freien Ende des rohrförmigen Körpers (6) angeordneten, sich radial nach außen erstreckenden umlaufenden Vorsprung (7) und andererseits durch das Kopfteil (4) des Gehäuses (21, 4) begrenzt.

Auf der dem Ringkolben (46) abgewandten anderen Stirnseite der zweiten Hülse (9) ist eine Druckfeder (15 bzw. 20) vorgesehen, die sich mit ihrem einen Ende an einer Abstufung eines ringförmigen Teiles (17) abstützt, welches an dem Ende des rohrförmigen Gehäuses (21,4) mittels eines Sicherungsringes (19) gesichert ist, welches dem Kopfteil (4) des Gehäuses (21, 4) gegenüberliegt. Das ringförmige Teil (17) dient ferner zur Zentrierung eines an die Einrichtung angeflanschten Arbeitszylinders. Der Sicherungsring (19) ist in einer Nut (18) in der Innenwand des Gehäuses (21, 4) gelagert Mit ihrem anderen Ende beaufschlagt die Druckfeder (15 bzw. 20) die zweite Hülse (9) in Richtung auf den Ringkolben (46) zu.

Die beiden Federn (15 bzw. 20) sind in der Zeichnung unterschiedlich stark dargestellt.
Die stärkere Feder (20) wird eingesetzt, wenn mit Federkraft geklemmt bzw. gebremst wird und mittels des Ringkolbens (46) die Klemmwirkung bzw. Bremswirkung aufgehoben werden soll. Die schwächere Feder (15) wird eingesetzt, wenn mit dem Ringkolben (46) die Klemmung bzw. Bremsung bewirkt und mit der Feder (15) die Klemmwirkung bzw. Bremswirkung aufgehoben werden soll. Im zweiten Fall dient die Feder (15) ausschließlich als Rückstellkraft.

Um ein Herausrollen der Wälzkörper (26, 27, 28 bzw. 35, 36, 37) in Richtung der Längsachse der Ausnehmungen (54, 55) bzw. (56, 57) aus den Ausnehmungen (54, 55, 56, 57) zu verhindern, ist, wie bereits beschrieben, die Tiefe der Ausnehmungen so bemessen, daß die einander zugewandten Stirnseiten (22, 30) bzw. (39, 44) bzw. (14, 8) bzw. (31, 38) der Ausnehmungen (54, 55) bzw. (56, 57) als Anschläge für die Wälzkörper (26, 27, 28) bzw. (35, 36, 37) dienen.

Die Anzahl der Reihen von Wälzkörpern ist abhängig von der Anzahl der Klemmelemente.

Die Kolbenstange (16) ist mittels eines mit einem Sicherungsring (53) gesicherten Dichtringes (52) aus dem zylindrischen Ring (1) abgedichtet herausgeführt.

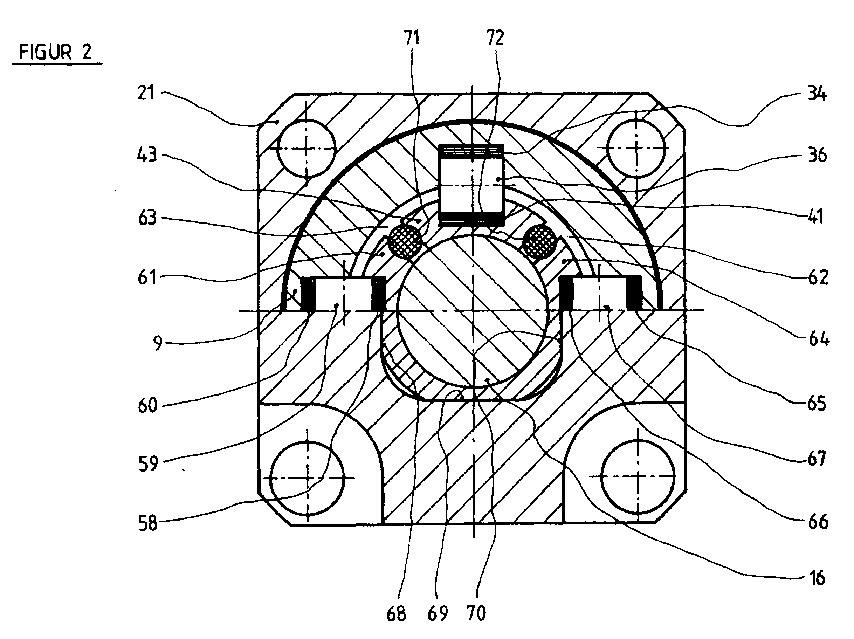

In Fig.2 ist ein Schnitt durch das rohrförmige Gehäuse (21, 4) mit der Kolbenstange (16) und den beiden koaxial zu dieser angeordneten Hülsen (3 und 9) dargestellt.

Die vier Klemmelemente der ersten Hülse (dargestellt sind in der Zeichnung drei Klemmelemente (43, 64 und 61) werden dadurch gebildet, daß der freie Endbereich der ersten Hülse (3) mit in Längsrichtung verlaufenden Schlitzen (62, 63) versehen ist.
In die äußere Mantelfläche der ersten Hülse (3) und in die Innenwand der diese umgebenden zweiten Hülse (9) sind die Ausnehmungen für die die schrägen Laufflächen aufweisenden Laufflächen-Teile (34 und 41) bzw. (65 und 66) bzw. (58 und 60) eingearbeitet. Die Ausnehmungen sind einander gegenüberliegend angeordnet, so daß die Wälzkörper (36, 67 und 59) in diesen geführt werden.
Wie bereits erwähnt, sind die als Rollen ausgebildeten Wälzkörper (36, 67 und 59) so angeordnet, daß ihre Längsachse quer zur Längsachse des als Kolbenstange dienenden zylindrischen Körpers (16) verläuft.

Die Funktion der im Vorstehenden beschriebenen Brems- oder/und Klemmeinrichtung wird nachstehend näher erläutert.

Es wird angenommen, daß gemäß Fig.1 die Kolbenstange (16) vom Arbeitskolben nach rechts aus dem Zylinder ausgefahren wird. Während dieses Vorganges befindet sich die Klemmeinrichtung in der Lösestellung. Soll der Arbeitskolben und somit auch die Kolbenstange (16) in einer gewünschten Position arretiert werden, so wird bei der Ausbildung der Brems- oderlund Klemmeinrichtung gemäß dem unteren Teil der Zeichnung über den Druckmittelanschluß (51) und den Kanal (50) Druckmittel in die vom Ringkolben (46) begrenzte Druckmittelkammer (49) eingesteuert. Der sich in der Druckmittelkammer (49) aufbauende Druck schiebt den relativ zum Betätigungsglied (9) bewegbaren Ringkolben (46) und somit auch die als Betätigungsglied dienende zweite Hülse (9) entgegen der Kraft der Druckfeder (15) nach links in Richtung auf den ringförmigen Körper (17) zu.
Die Wälzkörper (26, 27, 28) werden dabei nach links, in Richtung auf das freie Ende der als Träger für die Klemmelemente (24) dienenden ersten Hülse (3) zu bewegt.

Bei diesem Vorgang sind die schrägen Laufflächen (12 und 25) der beiden Laufflächen-Teile (11 und 23) bestrebt, sich einander zu nähern, wodurch sich derAbstand zwischen diesen beiden Teilen verkleinern würde. Da zwischen den Laufflächen (12 und 25) jedoch die Wälzkörper (26, 27, 28) angeordnet sind, bleibt der Abstand zwischen den Laufflächen gleich. Da es sich bei der äußeren Hülse (9) um einen geschlossenen starren, ringförmigen Körper handelt, können die Wälzkörper nicht nach außen ausweichen. Sie übertragen deshalb die von der äußeren Hülse (9) auf sie ausgeübte Kraft auf die Klemmelemente (24), wodurch diese gegen die Mantelfläche der Kolbenstange (16) gedrückt werden. Die an der inneren Hülse (3) angeordneten Klemmelemente (24) sind jetzt mit der Kolbenstange (16) verspannt.

Soll die Arretierung der Kolbenstange (16) wieder aufgehoben werden, so wird die vom Ringkolben (46) begrenzte Druckmittelkammer (49) entlüftet Die Druckfeder (15) verschiebt die zweite Hülse (9) und somit auch den Ringkolben (46) nach rechts, in Richtung auf das Kopfteil (4) des Gehäuses (21,4) zu. Die Wälzkörper (26, 27, 28) rollen auf den schrägen, jedoch parallel zueinander verlaufenden Laufflächen (12) bzw. (25) der Laufflächen-Teile (11) bzw. (23) der Klemmelemente (24) bzw. der zweiten Hülse (9) nach rechts ab, und die Klemmelemente (24) lösen sich von der Kolbenstange (16).

Soll nicht mittels der Kraft des Druckmittels, sondern mittels Federkraft eine Brems- bzw. Klemmwirkung erzielt werden, so wird bei Druckbeaufschlagung der Druckmittelkammer (49) der Ringkolben (46) gegen die Kraft der Feder (20) verschoben, wobei dieser die zwischen der Feder (20) und dem Ringkolben (46) angeordnete, als Betätigungsglied dienende zweite Hülse (9) in die Bremslösestellung bringt.

Im oberen Teil derZeichnung ist das Betätigungsglied in der Bremslösestellung dargestellt, wobei der Ringkolben (46) am Anschlag (7) des rohrförmigen Körpers (6) anliegt.

Soll die Bremse aktiviert werden, so wird der Druck in der Druckmittelkammer (49) über eine nicht dargestellte Ventileinrichtung abgebaut.
Mittels der Kraft der Feder (20) wird die zweite Hülse (9) nach rechts in Richtung auf das Kopfteil (4) des Gehäuses (21, 4) zu verschoben.
Da die die schrägen Laufflächen (42) bzw. (33) aufweisenden Laufflächen-Teile (41) bzw. (34) in den nutartigen Ausnehmungen (55) der Klemmelemente (43) und in den nutartigen Ausnehmungen (57) der zweiten Hülse (9) um 180° verdreht in diese Ausnehmungen eingesetzt sind, so daß die den Klemmelementen (43) zugeordneten Laufflächen-Teile eine von links nach rechts verlaufende Steigung und die der äußeren Hülse (9) zugeordneten Laufflächen-Teile (34) ein von links nach rechts verlaufendes Gefälle aufweisen, sind die Laufflächen (42) der den Klemmelementen (43) zugeordneten Laufflächen-Teile (41) und die Laufflächen (33) der der zweiten Hülse (9) zugeordneten Laufflächen-Teile (34) bestrebt, sich einander zu nähern.

Durch die zwischen den einander gegenüberliegenden Laufflächen (42 und 33) angeordneten Wälzkörper (35, 36, 37) wird eine Annäherung dieser Laufflächen (42 und 33) jedoch verhindert. Die Wälzkörper (35, 36, 37) weichen in Richtung auf die Klemmelemente (43) zu aus und bewirken dadurch ein Andrücken der Klemmelemente (43) an den als Kolbenstange dienenden zylindrischen Körper (16). Die Klemmelemente (43) und der als Kolbenstange dienende zylindrische Körper (16) werden gegeneinander verspannt.

Soll die Arretierung des als Kolbenstange dienenden zylindrischen Körpers (16) wieder gelöst werden, so wird in die Druckmittelkammer (49) Druckmittel eingesteuert. Der sich in der Druckmittelkammer (49) aufbauende Druck verschiebt den Ringkolben (46) und somit auch die zweite Hülse (9) entgegen der Kraft der Feder (20) nach links in Richtung auf den ringförmigen Körper (17) zu. Aufgrund der Reibung zwischen den Laufflächen (33 und 42) sowie den Wälzkörpern (35, 36 und 37) rollen die Wälzkörper (35, 36, 37) auf den Laufflächen (33 und 42) soweit ab, bis der Wälzkörper (35) am Anschlag (39) zur Anlage kommt. Da sich jetzt die den geringeren Durchmesser aufweisenden Bereiche der Laufflächen-Teile (34 und 41) einander gegenüberstehen, die Klemmelemente (43) aber aufgrund ihrer Elastizität sich in Richtung auf die Laufflächen-Teile (34) der äußeren Hülse (9) zu bewegen, verbleiben die Wälzkörper (35, 36, 37) mit den Laufflächen (33 und 42) der Laufflächen-Teile (34 und 41) in Anlage und der als Kolbenstange dienende zylindrische Körper (16) wird von den Klemmelementen (43) aufgrund ihrer Elastizität freigegeben.

Die die Laufflächen (33, 42) bzw. (12, 25) aufweisenden Laufflächen-Teile (34 bzw. 41) und (11 bzw. 23) können in die nutartigen Ausnehmungen eingelegt sein, sie können aber auch unter leichter Vorspannung in diese eingedrückt sein oder mittels Steck-, Schnapp- oder sonstiger Verbindungsmittel mit den Klemmelementen (24 und 43) bzw. mit der äußeren Hülse (9) verbunden sein.

Die die Laufflächen für die Wälzkörper aufweisenden Laufflächen-Teile an den Klemmelementen und an der äußeren Hülse können so ausgebildet sein, daß, wie in der Zeichnung dargestellt, sowohl die an den Klemmelementen als auch die an der äußeren Hülse angeordneten Laufflächen-Teile eine Steigung bzw. ein Gefälle aufweisen, sie können aber auch so ausgebildet sein, daß lediglich die an den Klemmelementen vorgesehenen Laufflächen-Teile oder lediglich die an der äußeren Hülse angeordneten Laufflächen-Teile eine Steigung bzw. ein Gefälle aufweisen.
Im zuletzt genannten Fall würde sich zwischen den Laufflächen-Teilen der Klemmelemente und den Laufflächen-Teilen der äußeren Hülse ein sich verjüngender Spalt ergeben, in welchem, in axialer Richtung gesehen, nur ein Wälzkörper pro Klemmelement angeordnet werden könnte.

Dadurch, daß sowohl an den Klemmelementen als auch an der äußeren Hülse schräge Laufflächen für Wälzkörper aufweisende Laufflächen-Teile angeordnet sind, wobei jeweils zwei einander gegenüberliegende Laufflächen-Teile so zueinander angeordnet sind, daß in derselben Richtung gesehen das eine Laufflächen-Teil eine Steigung und das jeweils andere Laufflächen-Teil ein Gefälle aufweist, entsteht ein Spalt für die Wälzkörper, der von zwei einander gegenüberliegenden, parallel zueinander verlaufenden Laufflächen begrenzt wird.

Diese Ausbildung und Anordnung ermöglicht es, in axialer Richtung gesehen, mehrere Wälzkörper mit gleichem Durchmesser hintereinander anzuordnen.

Die Brems- bzw. Klemmwirkung zwischen den Klemmelementen und dem als Kolbenstange ausgebildeten zylindrischen Körper wird dadurch erreicht, daß bei einer Relativbewegung zwischen der äußeren Hülse und der die Klemmelemente aufweisenden inneren Hülse in Richtung ihrer Längsachse die die Laufflächen aufweisenden Laufflächen-Teile bestrebt sind, ihren Abstand zueinander zu verringern (der den größeren Querschnitt aufweisende Bereich des einen Laufflächen-Teiles gelangt in den den größeren Querschnitt aufweisenden Bereich des jeweils anderen gegenüberliegenden Laufflächen-Teiles). Durch die Wälzkörper zwischen den einander gegenüberliegenden Laufflächen-Teilen wird der Abstand zwischen diesen Laufflächen-Teilen jedoch konstant gehalten. Das elastisch gehalterte oder ausgebildete Klemmelement bzw. die elastisch gehalterten oder ausgebildeten Klemmelemente müssen bei einer Relativbewegung zwischen der äußeren starren Hülse und der die Klemmelemente tragenden Hülse in Richtung auf den als Kolbenstange dienenden zylindrischen Körper zu ausweichen.

Es ist auch denkbar, anstelle einer Feder eine zweite von einem zweiten Ringkolben begrenzte Druckmittelkammer vorzusehen, so daß die als Betätigungsglied dienende zweite Hülse sowohl von einem ersten als auch von einem zweiten Ringkolben wahlweise in die Sperrstellung oder in die Lösestellung bringbar ist.

Versieht man die zweite Hülse mit Längsschlitzen und ordnet sie so in einem Zylinder an, daß ihre von den Längsschlitzen begrenzten Abschnitte an der Zylinderinnenwand zur Anlage bringbar sind, so können die als Klemmelemente dienenden Abschnitte von einem in der zweiten Hülse geführten Element, z.B. einem Kolben, über die schrägen Laufflächen und die mit diesen zusammenwirkenden Wälzkörper gegen die Zylinderinnenwand gedrückt werden.
Diese Ausführungsform eignet sich besonders für kolbenstangenlose Arbeitszylinder, bei welchen der Arbeitskolben zwecks Positionierens in vorbestimmbaren Stellungen festsetzbar sein soll.

Beim Gegenstand nach der Zeichnung kann die als Betätigungsglied dienende Hülse sowohl mittels des Ringkolbens (46) als auch mittels der Feder (20) in eine Stellung gebracht werden, in welcher die Klemmelemente wirksam werden. Zu diesem Zweck ist lediglich ein Verdrehen der die schrägen Laufflächen aufweisenden Laufflächen-Teile um 180° erforderlich. M itels der beschriebenen Brems- und/oder Klemmeinrichtung kann eine Bewegung eines zylindrischen Körpers in Richtung seiner Längsachse als auch eine Drehbewegung des zylindrischen Körpers um seine Längsachse gebremst werden.

Die innere Hülse (3) ist verdrehgesichert durch vierAbflachungen (68, 69, 70), wie in Fig.2 dargestellt. Die Abflachungen (68, 69, 70) stehen mit entsprechenden Abflachungen des Gehäuses in Verbindung.

In den Schlitzen (62 und 63) können aus einem elastischen Material bestehende Elemente (71 und 72) vorgesehen werden, die z.B. aus zylindrisch ausgebildeten Gummi- oder Kunststoffstücken bestehen können, wie in Fig.2 dargestellt Diese Elemente (71, 72) drücken die Klemmelemente (43, 61, 64 auseinander, wodurch ein leichtes Lösen der Klemmung bewirkt wird.

## Patentansprüche

1. Brems- oder/und Klemmeinrichtung für einen axial bewegbaren oder/und drehbaren zylindrischen Körper mit folgenden Merkmalen:
a) es sind Klemmelemente (24, 43) vorgesehen, die im wesentlichen radial zum zylindrischen Körper (16) bewegbar sind;
b) die Klemmelemente (24, 43) sind an einem Träger (3) angeordnet, welcher koaxial zum zylindrischen Körper (16) angeordnet ist;
c) es ist ein Betätigungsglied (9) vorgesehen, welches koaxial zum zylindrischen Körper (16) angeordnet und relativ zum zylindrischen Körper (16) in Richtung dessen Längsachse verschiebbar ist;
d) es sind Walzkörper (26, 27, 28 bzw. 35, 36, 37) vorgesehen, welche zwischen den Klemmelementen (24, 43) und dem Betätigungsglied (9) angeordnet sind;
e) die Wälzkörper (26, 27, 28 bzw. 35, 36, 37) liegen an einer schräg zur Längsachse des zylindrischen Körpers (16) verlaufenden und so angeordneten Lauffläche (25, 42) an, daß sich bei einer Bewegung des Betätigungsgliedes (9) in Richtung der Längsachse des zylindrischen Körpers (16) die Wälzkörper (26, 27, 28 bzw. 35, 36, 37) die Klemmelemente (24, 43) auf den zylindrischen Körper (16) zu bewegen;
f) es ist eine Betätigungseinrichtung (46) zur Bewegung des Betätigungsgliedes (9) in Längsrichtung des zylindrischen Körpers vorgesehen;
**gekennzeichnet durch die folgenden Merkmale:**
g) die schräg zur Längsachse des zylindrischen Körpers (16) verlaufenden Laufflächen (25, 42 bzw. 12, 33) sind auf gesonderten Laufflächen-Teilen (23, 41 bzw. 11, 34) angeordnet;
h) die Laufflächen-Teile (23,41 bzw. 11,34) sind an den Klemmelementen (24,43) und dem Betätigungsglied (9) lösbar angebracht, sie sind nämlich in nutartigen Ausnehmungen (54 und 55) der Klemmelemente (24,43) und in nutartigen Ausnehmungen (56 und 57) des Betätigungsgliedes (9) aufgenommen, wobei die Laufflächen-Teile (23,41 bzw. 11,34) wahlweise so angebracht werden können, daß mit ihnen entweder in der einen Bewegungsrichtung oder in der anderen Bewegungsrichtung des Betätigungsgliedes (9) Brems- oder Klemmwirkung an dem zylindrischen Körper erzielt wird, indem die Laufflächen-Teile (41;34) in den nutartigen Ausnehmungen (55) der Klemmelemente (43) und in den nutartigen Ausnehmungen (57) des Betätigungsgliedes (9) um 180° verdreht einsetzbar sind.

2. Brems- oder/und Klemmeinrichtung nach Anspruch 1, dadurch gekennzeichnet, daß sowohl die Laufflächen (25, 42) der mit den Klemmelementen (24, 43) verbundenen Laufflächen-Teile (23, 41) als auch die Laufflächen (12, 33) der mit dem Betätigungsglied (9) verbundenen Laufflächen-Teile (11, 34) schräg zur Längsachse des zylindrischen Körpers (16) verlaufen, wobei die mit den Klemmelementen (24, 43) verbundenen Laufflächen-Teile (23, 41) und die mit dem Betätigungsglied (9) verbundenen Laufflächen-Teile (11, 34) so zueinander angeordnet sind, daß die Laufflächen (25, 42) der mit den Klemmelementen (24, 43) verbundenen Laufflächen-Teile (23, 41) parallel zu den Laufflächen (12, 33) der mit dem Betätigungsglied (9) verbundenen Laufflächen-Teile (11, 34) verlaufen.

3. Brems- oder/und Klemmeinrichtung nach wenigstens einem der vorhergehenden Ansprüche, dadurch gekennzeichnet, daß jedes der eine schräge Lauffläche (25, 42) aufweisenden Laufflächen-Teile (23, 41) in einer Ausnehmung (54 bzw. 55) des zugeordneten Klemmelementes (24 bzw. 43) angeordnet ist, die auf der dem Betätigungsglied (9) zugewandten Seite gelegen ist.

4. Brems- oder/und Klemmeinrichtung nach wenigstens einem der vorhergehenden Ansprüche, dadurch gekennzeichnet, daß jedes der eine schräge Lauffläche (25 bzw. 42 bzw. 12 bzw. 33) aufweisenden Laufflächen-Teile (23 bzw. 41 bzw. 11 bzw. 34) in einer Ausnehmung (54 bzw. 55) des zugeordneten Klemmelementes (24 bzw. 43) bzw. in einer Ausnehmung (56 bzw. 57) des Betätigungsgliedes (9) angeordnet ist, wobei die Ausnehmungen (54 bzw. 55) der Klemmelemente (24 bzw. 43) und die Ausnehmungen (56 bzw. 57) des Betätigungsgliedes (9) einander zugewandt sind.

5. Brems- oder/und Klemmeinrichtung nach wenigstens einem der vorhergehenden Ansprüche, dadurch gekennzeichnet, daß die Laufflächen-Teile (23, 41 bzw. 11, 34) aus einem gehärteten Material bestehen.

6. Brems- oder/und Klemmeinrichtung nach wenigstens einem der vorhergehenden Ansprüche, dadurch gekennzeichnet, daß in Richtung der Längsachse der Klemmelemente (24 bzw. 43) und des Betätigungsgliedes (9) mehrere Wälzkörper (26, 27, 28 bzw. 35, 36, 37) angeordnet sind.

7. Brems- oder/und Klemmeinrichtung nach wenigstens einem der vorhergehenden Ansprüche, dadurch gekennzeichnet, daß in Umfangsrichtung der Klemmelemente (24 bzw. 43) und des Betätigungsgliedes (9) mehrere Wälzkörper angeordnet sind.

8. Brems- oder/und Klemmeinrichtung nach wenigstens einem der vorhergehenden Ansprüche, gekennzeichnet durch die folgenden Merkmale:
a) der Träger für die Klemmelemente (24, 43) besteht aus einem zylindrischen Eiement (3), welches Schlitze (62, 63) aufweist;
b) die Klemmelemente (24, 43) werden von Abschniten des zylindrischen Elementes (3) gebildet, die durch die Schlitze (62, 63) begrenzt sind.

9. Brems- oder/und Klemmeinrichtung nach wenigstens einem der vorhergehenden Ansprüche, dadurch gekennzeichnet, daß das Betätigungsglied (9) als Hülse ausgebildet ist.

10. Brems- oder/und Klemmeinrichtung nach wenigstens einem der vorhergehenden Ansprüche, dadurch gekennzeichnet, daß das zylindrische Element als Hülse ausgebildet ist.

11. Brems- oder/und Klemmeinrichtung nach wenigstens einem der vorhergehenden Ansprüche, gekennzeichnet durch die folgenden Merkmale:
a) in der die Klemmelemente (24, 43) und den Träger für die Klemmelemente (24, 43) bildenden Hülse (3) ist wenigstens ein Teil des zylindrischen Körpers (16) axial bewegbar oder/und drehbar gelagert;
b) die als Betätigungsglied dienende Hülse (9) ist koaxial zu der die Klemmelemente (24, 43) aufweisenden Hülse (3) angeordnet und in axialer Richtung relativ zu dieser bewegbar;
c) wenigstens eine der beiden Hülsen (3 bzw. 9) weist wenigstens ein eine schräge Lauffläche aufweisendes Laufflächen-Teil auf, welches in Richtung der Längsachse des zylindrischen Körpers (16) verläuft.

12. Brems- oder/und Klemmeinrichtung nach wenigstens einem der vorhergehenden Ansprüche, gekennzeichnet durch die folgenden Merkmale:
a) die Betätigungseinrichtung besteht aus einem Ringkolben (46), welcher die die Klemmelemente (24, 43) aufweisende erste Hülse (3) umgibt und in axialer Richtung verschiebbar zu dieser angeordnet ist;
b) der Ringkolben (46) weist einen sich in Richtung auf die eine Stirnseite des Betätigungsgliedes (9) zu erstreckenden Fortsatz (45) auf, welcher an dieser Stirnseite des Betätigungsgliedes (9) anliegt.

13. Brems- oder/und Klemmeinrichtung nach wenigstens einem der vorhergehenden Ansprüche, dadurch gekennzeichnet, daß das Betätigungsglied (9) mittels der Betätigungseinrichtung (46) gegen eine Rückstellkraft in Sperrichtung betätigbar ist.

14. Brems- oder/und Klemmeinrichtung nach wenigstens einem der vorhergehenden Ansprüche, dadurch gekennzeichnet, daß das Betätigungsglied (9) mittels der Betätigungseinrichtung (46) gegen eine Rückstellkraft in Löserichtung betätigbar ist.

15. Brems- oder/und Klemmeinrichtung nach wenigstens einem der vorhergehenden Ansprüche, dadurch gekennzeichnet, daß als Rückstellkraft eine Feder (15, 20) vorgesehen ist.

16. Brems- oder/und Klemmeinrichtung nach wenigstens einem der vorhergehenden Ansprüche, dadurch gekennzeichnet, daß der als Betätigungseinrichtung dienende Kolben (46) in Richtung auf die Sperrstellung oder in Richtung auf die Lösestellung der Brems- oder/und Klemmeinrichtung vom Druckmittel aus einer Druckmittelquelle betätigbar ist.

17. Brems- oder/und Klemmeinrichtung nach wenigstens einem der vorhergehenden Ansprüche, dadurch gekennzeichnet, daß das Betätigungsglied (9) mittels der Kraft einer Feder (15, 20) in die Sperrstellung bringbar ist.

18. Brems- oder/und Klemmeinrichtung nach wenigstens einem der vorhergehenden Ansprüche, dadurch gekennzeichnet, daß in den Schlitzen (62, 63) zwischen den Klemmelementen (43, 61, 64) aus einem elastischen Material bestehende Elemente (71, 72) angeordnet sind.

## Claims

1. Braking or/and clamping device for a cylindrical member which is able to move axially or/and rotate, with the following features:
a) clamping members (24, 43) are provided, which are able to move substantially radially with respect to the cylindrical member (16);
b) the clamping members (24, 43) are disposed on a support (3), which is arranged coaxially with respect to the cylindrical member (16);
c) an actuating member (9) is provided, which is disposed coaxially with respect to the cylindrical member (16) and is able to slide relative to the cylindrical member (16) in the direction of its longitudinal axis;
d) rolling members (26, 27, 28) or (35, 36, 37) are provided, which are disposed between the clamping members (24, 43) and the actuating member (9);
e) the rolling members (26, 27, 28) or (35, 36, 37) bear against a contact surface (25, 42) extending obliquely with respect to the longitudinal axis of the cylindrical member (16) and arranged so that at the time of a movement of the actuating member (9) in the direction of the longitudinal axis of the cylindrical member (16), the rolling members (26, 27, 28) or (35, 36, 37) move the clamping members (24, 43) towards the cylindrical member (16);
f) an actuating device (46) is provided for moving the actuating member (9) in the longitudinal direction of the cylindrical member;
characterised by the following features:
g) the contact surfaces (25, 42) or (12, 33) extending obliquely with respect to the longitudinal axis of the cylindrical member (16) are disposed on separate contact surface parts (23, 41) or (11, 34);
h) the contact surface parts (23, 41) or (11, 34) are detachably located on the clamping members (24, 43) and the actuating member (9), namely they are received in groove-like recesses (54 and 55) of the clamping members (24, 43) and in groove-like recesses (56 and 57) of the actuating member (9), the contact surface parts (23, 41) or (11, 34) being able to be located optionally so that with the latter, either in one direction of movement or in the other direction of movement of the actuating member (9), a braking or clamping action on the cylindrical member is achieved, in that the contact surface parts (41; 34) can be inserted rotated through 180° in the groove-like recesses (55) of the clamping members (43) and in the groove-like recesses (57) of the actuating member (9).

2. Braking or/and clamping device according to Claim 1, characterised in that both the contact surfaces (25, 42) of the contact surface parts (23, 41) connected to the clamping members (24, 43) as well as the contact surfaces (12, 33) of the contact surface parts (11, 34) connected to the actuating member (9) extend obliquely with respect to the longitudinal axis of the cylindrical member (16), the contact surface parts (23, 41) connected to the clamping members (24, 43) and the contact surface parts (11, 34) connected to the actuating member (9) being arranged with respect to each other so that the contact surfaces (25, 42) of the contact surface parts (23, 41) connected to the clamping members (24, 43) extend parallel to the contact surfaces (12, 33) of the contact surface parts (11, 34) connected to the actuating member (9).

3. Braking or/and clamping device according to at least one of the preceding Claims, characterised in that each of the contact surface parts (23, 41) comprising an inclined contact surface (25, 42) is disposed in a recess (54 or 55) of the associated clamping member (24 or 43), which is located on the side facing the actuating member (9).

4. Braking or/and clamping device according to at least one of the preceding Claims, characterised in that each of the contact surface parts (23 or 41) or (11 or 34) comprising an inclined contact surface (25 or 42) or (12 or 33) is disposed in a recess (54 or 55) of the associated clamping member (24 or 43) or in a recess (56 or 57) of the actuating member (9), the recesses (54 or 55) of the clamping members (24 or 43) and the recesses (56 or 57) of the actuating member (9) facing each other.

5. Braking or/and clamping device according to at least one of the preceding Claims, characterised in that the contact surface parts (23, 41) or (11, 34) consist of a hardened material.

6. Braking or/and clamping device according to at least one of the preceding Claims, characterised in that a plurality of rolling members (26, 27, 28) or (35, 36, 37) is disposed in the direction of the longitudinal axis of the clamping members (24 or 43) and of the actuating member (9).

7. Braking or/and clamping device according to at least one of the preceding Claims, characterised in that a plurality of rolling members is disposed in the peripheral direction of the clamping members (24 or 43) and of the actuating member (9).

8. Braking or/and clamping device according to at least one of the preceding Claims, characterised by the following features:
a) the support for the clamping members (24, 43) consists of a cylindrical member (3), which comprises slots (62, 63);
b) the clamping members (24, 43) are formed by sections of the cylindrical member (3), which are defined by the slots (62, 63).

9. Braking or/and clamping device according to at least one of the preceding Claims, characterised in that the actuating member (9) is constructed as a sleeve.

10. Braking or/and clamping device according to at least one of the preceding Claims, characterised in that the cylindrical member is constructed as a sleeve.

11. Braking or/and clamping device according to at least one of the preceding Claims, characterised by the following features:
a) at least one part of the cylindrical member (16) is mounted to move axially or/and to rotate in the sleeve (3) forming the clamping members (24, 43) and the support for the clamping members (24, 43);
b) the sleeve (9) serving as an actuating member is disposed coaxially with respect to the sleeve (3) comprising the clamping members (24, 43) and is able to move in the axial direction relative to the latter;
c) at least one of the two sleeves (3 or 9) comprises at least one contact surface part comprising an inclined contact surface, which part extends in the direction of the longitudinal axis of the cylindrical member (16).

12. Braking or/and clamping device according to at least one of the preceding Claims, characterised by the following features:
a) the actuating device consists of an annular piston (46), which surrounds the first sleeve (3) comprising the clamping members (24, 43) and is arranged to move in the axial direction with respect to the latter;
b) the annular piston (46) comprises a projection (45) extending in the direction of one end face of the actuating member (9), which projection bears against this end face of the actuating member (9).

13. Braking or/and clamping device according to at least one of the preceding Claims, characterised in that the actuating member (9) can be actuated in the locking direction against a restoring force by means of the actuating device (46).

14. Braking or/and clamping device according to at least one of the preceding Claims, characterised in that the actuating member (9) can be actuated in the release direction against a restoring force by means of the actuating device (46).

15. Braking or/and clamping device according to at least one of the preceding Claims, characterised in that a spring (15, 20) is provided as the restoring force.

16. Braking or/and clamping device according to at least one of the preceding Claims, characterised in that the piston (46) serving as the actuating device can be actuated in the direction of the locking position or in the direction of the release position of the braking or/and clamping device by pressure medium from a pressure medium source.

17. Braking or/and clamping device according to at least one of the preceding Claims, characterised in that the actuating member (9) can be brought into the locking position by means of the force of a spring (15, 20).

18. Braking or/and clamping device according to at least one of the preceding Claims, characterised in that members (71, 72) consisting of a resilient material are disposed in the slots (62, 63) between the clamping members (43, 61, 64).

## Revendications

1. Installation de freinage et/ou de serrage pour un corps cylindrique mobile axialement et/ou en rotation, dans lequel :
a) il comporte des éléments de serrage (24, 43) qui sont mobiles principalement dans la direction radiale par rapport au corps cylindrique (16),
b) les éléments de serrage (24, 43) sont montés sur un support (3) coaxial à l'organe cylindrique (16),
c) il est prévu un organe de manoeuvre (9) coaxial au corps cylindre (16) et qui peut coulisser par rapport au corps cylindrique (16) dans la direction longitudinale de celui-ci,
d) des organes de roulement (26, 27, 28 ou 35, 36, 37) sont prévus entre les éléments de serrage (24, 43) et l'organe de manoeuvre (9),
e) les organes de roulement (26, 27, 28 ou 35, 36, 37) s'appuient sur des surfaces de roulement (25, 42) dirigées et disposées inclinées par rapport à l'axe longitudinal du corps cylindrique (16) et en ce que lors d'un déplacement de l'organe de manoeuvre (9) en direction de l'axe longitudinal du corps cylindrique (16), les organes de roulement (26, 27, 28 ou 35, 36, 37) déplacent les éléments de serrage (24, 43) sur le corps cylindrique (16),
f) une installation de manoeuvre (46) est prévue pour déplacer l'organe de manoeuvre (9) dans la direction longitudinale du corps cylindrique,
caractérisée par les points suivants :
g) les surfaces de roulement (25, 42 ou 12, 33) dirigées inclinées par rapport à l'axe longitudinal du corps cylindrique (16) sont prévues sur des parties de surface de roulement (23, 41, 11, 34) particulières,
h) les parties de surface de roulement (23, 41 ; 11, 34) sont montées amovibles sur des éléments de serrage (24, 43) et/ou sur l'organe de manoeuvre (9), en étant effectivement logées dans des cavités (54, 55) en forme de rainures des éléments de serrage (24, 43) et dans des cavités (56, 57) en forme de rainures de l'organe de manoeuvre (9), les parties de surface de roulement (23, 41 ; 11, 34) pouvant être prévues sélectivement pour arriver à des effets de freinage ou de serrage des corps cylindriques pour l'une ou l'autre direction de déplacement de l'organe de manoeuvre (9), en ce que les parties de surface de roulement (41, 34) viennent dans les cavités (55) en forme de rainures des éléments de serrage (43) et dans les cavités en forme de rainures (57) de l'organe de manoeuvre (9) en étant mises en place tournées à 180°.

2. Installation de freinage et/ou de serrage selon la revendication 1,
caractérisée en ce qu'
à la fois les surfaces de roulement (25, 42) des parties de surface de roulement (23, 41) reliées aux éléments de serrage (24, 43) de même que les surfaces de roulement (12, 33) des parties de surface de roulement (11, 34) reliées à l'organe de manoeuvre (9) sont dirigées inclinées par rapport à l'axe longitudinal du corps cylindrique (16), les parties de surface de roulement (23, 41) reliées aux éléments de serrage (24, 43) et les parties de surface de roulement (11, 34) reliées à l'organe de manoeuvre (9) sont disposées réciproquement pour que les surfaces de roulement (25, 42) des parties de surface de roulement (23, 41) reliées aux éléments de serrage (24, 43) soient parallèles aux surfaces de roulement (12, 33) des parties de surface de roulement (11, 34) reliées à l'organe de manoeuvre (9).

3. Installation de freinage et/ou se serrage selon au moins l'une des revendications précédentes,
caractérisée en ce que
chacune des parties de surface de roulement (23, 41) ayant une surface de roulement inclinée (25, 42) est logée dans une cavité (54, 55) de l'élément de serrage (24, 43) correspondant, et est située du côté tourné vers l'organe de manoeuvre (9).

4. Installation de freinage et/ou de serrage selon au moins l'une des revendications précédentes,
caractérisée en ce que
chacune des parties de surface de roulement (23, 41 ou 11, 34) ayant une surface de roulement inclinée (25, 42 ou 12, 33) est logée dans une cavité (54, 55) de l'élément de serrage (24, 43) associée ou dans une cavité (56, 57) de l'élément de manoeuvre (9), les cavités (54, 55) des éléments de serrage (24, 43) et les cavités (56, 57) de l'élément de manoeuvre (9) étant tournées l'une vers l'autre.

5. Installation de freinage et/ou de serrage selon au moins l'une des revendications précédentes,
caractérisée en ce que
les parties de surface de roulement (23, 41 ou 11, 34) sont un matériau traité (trempé).

6. Installation de freinage et/ou de serrage selon au moins l'une des revendications précédentes,
caractérisée en ce que
plusieurs organes de roulement (26, 27, 28 ou 35, 36, 37) sont prévus dans la direction de l'axe longitudinal des éléments de serrage (24, 43) et de l'organe de manoeuvre (9).

7. Installation de freinage et/ou de serrage selon au moins l'une des revendications précédentes,
caractérisée en ce que
dans la direction périphérique des éléments de serrage (24, 43) et de l'organe de manoeuvre (9) sont disposés plusieurs organes de roulement.

8. Installation de freinage et/ou de serrage selon au moins l'une des revendications précédentes,
caractérisée par les moyens suivants :
a) le support de tous les éléments de serrage (24, 43) se compose d'un élément cylindrique (3) muni de fentes (62, 63),
b) les éléments de serrage (24, 43) sont formés par des segments de l'élément cylindrique (3) délimités par des fentes (62, 63).

9. Installation de freinage et/ou de serrage selon au moins l'une des revendications précédentes,
caractérisée en ce que
l'organe de manoeuvre (9) est en forme de manchon.

10. Installation de freinage et/ou de serrage selon au moins l'une des revendications précédentes,
caractérisée en ce que
l'élément cylindrique est en forme de manchon.

11. Installation de freinage et/ou de serrage selon au moins l'une des revendications précédentes,
caractérisée par les caractéristiques suivantes :
a) dans le manchon (3) formant les éléments de serrage (24, 43) et le support des éléments de serrage (24, 43), au moins une partie du corps cylindrique (16) peut se déplacer axialement et/ou en rotation,
b) le manchon (9) servant d'organe de manoeuvre est monté coaxialement au manchon (3) comportant les éléments de serrage (24, 43) et peut se déplacer par rapport à celui-ci dans la direction axiale,
c) au moins l'un des deux manchons (3, 9) comporte au moins une partie de surface de roulement avec une surface de roulement inclinée qui est dirigée dans la direction de l'axe longitudinal du corps cylindrique (16).

12. Installation de freinage et/ou de serrage selon au moins l'une des revendications précédentes,
caractérisée par les moyens suivants :
a) l'installation de manoeuvre se compose d'un piston annulaire (46) qui entoure le premier manchon (3) muni des éléments de serrage (24, 43) et qui est monté coulissant par rapport à celui-ci dans la direction axiale,
b) le piston annulaire (46) comporte un prolongement (45) qui s'étend en direction d'une face frontale de l'organe de manoeuvre (9) et qui s'appuie contre cette face frontale de cet organe de manoeuvre (9).

13. Installation de freinage et/ou de serrage selon au moins l'une des revendications précédentes,
caractérisée en ce que
l'organe de manoeuvre (9) est actionné en direction de blocage par l'installation de manoeuvre (46) agissant contre un ressort de rappel.

14. Installation de freinage et/ou de serrage selon au moins l'une des revendications précédentes,
caractérisée en ce que
l'organe de manoeuvre (9) est actionné dans le sens du desserrage par l'installation de manoeuvre (46) agissant contre une force de rappel.

15. Installation de freinage et/ou de serrage selon au moins l'une des revendications précédentes,
caractérisée en ce que
la force de rappel est un ressort (15, 20).

16. Installation de freinage et/ou de serrage selon au moins l'une des revendications précédentes,
caractérisée en ce que
le piston (46) servant d'installation de manoeuvre est mis en oeuvre par le fluide sous pression fourni par une source de fluide sous pression, dans le sens de la position de blocage ou dans le sens de la position de desserrage de l'installation de freinage et/ou de serrage.

17. Installation de freinage et/ou de serrage selon au moins l'une des revendications précédentes,
caractérisée en ce que
l'organe de manoeuvre (9) est conduit en position de blocage par la force d'un ressort (15, 20).

18. Installation de freinage et/ou de serrage selon au moins l'une des revendications précédentes,
caractérisée par
des éléments (71, 72) en un matériau élastique sont prévus dans les fentes (62, 63) entre les éléments de serrage (43, 61, 64).
